# EUROPEAN PATENT APPLICATION

(11) **EP 2 364 905 A1**
(43) Date of publication of application: **14.09.2011**
(21) Application number: 10156013.4
(22) Date of filing: 10.03.2010
(51) Int. Cl.: B62M 1/04, B62K 3/00, B62K 15/00

(54) **Standing bike**

(71) Applicant: Lee Kyoung Ok, Seoul 158-779 (KR)
(72) Inventor: Lee Kyoung Ok, Seoul 158-779 (KR)
(74) Representative: Grünecker, Kinkeldey, Stockmair & Schwanhäusser Anwaltssozietät

(57) **Abstract**

A standing bike (10) is provided. The standing bike comprises a body part (100), a handle part (200) and a power generating part. The body part (100) includes a driving wheel (140) rollably coupled to the rear thereof. The handle part (200) includes a steering wheel (220) provided in the front of the body part to determine the steering direction of the body part. The power generating part includes a rod (310) coupled to the center of the driving wheel, a pedal (320) installed at one end of the rod to generate driving power, and gear means consisting of a plurality of gears with different gear ratios provided at a lateral side of the driving wheel to increase the turning ratio of the pedal. The pedal is turned at limited angles from the top of the body part to the rear side of the body part to generate a rotational force when being depressed. The rotational force is transmitted to the driving wheel. The pedal is automatically returned to its original position by clutch means after the depressing operation and is ready for next depressing operation.

## Description

### BACKGROUND OF THE INVENTION

### 1. Field of the Invention

The present invention relates to a standing bike, and more specifically to a standing bike that runs with an enhanced rotational force generated through repeated turning of a pedal at limited angles.

### 2. Description of the Related Art

A general bike for enjoyment comprises a body part and a pair of wheels provided in front and rear of the body part. The front wheel is coupled so as to be rotatable at particular angles. Steering means is installed integrally with the front wheel to steer the front wheel.

A rider puts his/her one foot on the body part, stamps the ground with the other foot in the advancing direction to move the bike forward with a driving force, places his/her both feet on the upper surface of the body part in an accelerated state, and drives the bike while steering the front wheel by the operation of the steering means.

The bike is constructed to be advanced by the rider's stamping the ground with his/her foot to generate an artificial driving force. However, this construction limits improvement of the forward force of the bike, leading to a reduction of interest in exercise. Further, it is impossible to independently steer and rotate the wheels, which causes the rider to lose the ability to steer the bike and increases the risk of accidents during riding.

### SUMMARY OF THE INVENTION

It is, therefore, a principal object of the present invention to provide a standing bike that can be voluntarily moved forward by repeatedly turning a pedal at limited angles using the muscular power of a rider's leg.

It is another object of the present invention to provide a standing bike configured in which a pedal is automatically returned to its original position after being depressed and is ready for next depressing operation, so that the depressing operations are repeatedly performed to generate driving power.

It is another object of the present invention to provide a standing bike that uses the muscular power of a rider's leg while putting his/her weight on a pedal when the pedal is reciprocated at limited angles to generate driving power, so that the rider can take exercise without feeling fatigue in his/her legs, thus minimizing his/her physical exhaustion.

It is another object of the present invention to provide a standing bike in which a pedal increases the gear ratio of gears to increase the rotation ratio of a driving wheel, resulting in an increase in running speed.

It is another object of the present invention to provide a standing bike constructed such that a driving force of a pedal is not transmitted to a driving wheel any more when running at a high speed or along a downhill road.

It is another object of the present invention to provide a standing bike constructed such that a plurality of helical gears, which are effective in keeping their tightly engaged state against vibration and shock encountered during running, are used as gear means to convert a depressing operation of a pedal to a rotational movement and to increase the rotation ratio of a driving wheel.

It is still another object of the present invention to provide a standing bike designed to be foldable so that the volume can be minimized, achieving improved portability and storability.

In order to accomplish the above objects of the present invention, there is provided a standing bike which comprises: a body part including a driving wheel rollably coupled to the rear thereof; a handle part including a steering wheel provided in the front of the body part to determine the steering direction of the body part; and a power generating part including a rod coupled to the center of the driving wheel, a pedal installed at one end of the rod to generate driving power, and gear means consisting of a plurality of gears with different gear ratios provided at a lateral side of the driving wheel to increase the turning ratio of the pedal, wherein the pedal is turned at limited angles from the top of the body part to the rear side of the body part to generate a rotational force, which is transmitted to the driving wheel, when being depressed, and the pedal is automatically returned to its original position by clutch means after the depressing operation and is ready for next depressing operation.

In an embodiment, the body part has a support surface, on which a rider's foot is mounted, having a lengthwise housing hole formed at the center thereof; and the body part includes a panel whose center is partially cut away to form a pair of rounded protective surfaces in order to create a space, in which the driving wheel and the power generating part are installed, in the rear of the support surface, brackets installed vertically at both sides of the lower surface of the panel to support the rotations of the driving wheel and the power generating part, and a link installed in the front of the panel and having an arc-shaped guide hole, through which the handle part is turnably coupled, and fixing recesses formed at both distal ends of the guide hole.

In an embodiment, the handle part includes a fork bar, the steering wheel rollably coupled to the fork bar, a handle bar vertically connected to the upper side of the fork bar, a horizontal handle installed transversely on the handle bar to steer the steering wheel, and connection means having a connection bar hingedly coupled to the outer circumference of the fork bar to be turnable around the link and clips installed at both sides of the connection bar so as to be moved along the guide hole in conjunction with the connection bar, so that the fork bar is maintained in a horizontally or vertically supported state when the clips are latched by the fixing recesses.

In an embodiment, the gear means is constructed such that a rotating shaft connected to the rod is installed so as to penetrate the driving wheel, a first gear is fixed to the rotating shaft, the rotational force is increased and is transmitted through a second gear, a third gear and a fourth gear engaged sequentially with the first gear, and a driving shaft accommodating the rotating shaft therein is fixed to the center of the driving wheel to transmit the rotational force of the fourth gear fixed to the outer circumference thereof to the driving wheel.

In an embodiment, the second gear and the third gear are provided with a second sub-gear and a third sub-gear whose gear ratios are less than those of the second gear and the third gear, respectively, to sequentially increase the rotation ratio inputted from the first gear and to output the increased rotation ratio to the fourth gear.

In an embodiment, the clutch means is fixed to one end of the rotating shaft of the driving wheel; and the clutch means includes a housing block formed with ring grooves on the outer circumference thereof and housing recesses symmetrical to each other in the upper and lower portions thereof, clutches elastically coupled to rings introduced into the ring grooves to rotate in the housing recesses, an operation block rotatably coupled to the outer circumference of the housing block and provided with latch gears on the inner circumference thereof so that the clutches are latched in only one direction by the latch gears to transmit the rotational force transmitted through the rod of the pedal to the housing block and the rotating shaft therethrough and to roll the driving wheel, a finishing member fixed to a lateral side of the operation block, and an elastic member having a front end fixed to the finishing member and a distal end fixed to one of the brackets to rotate the housing block, which is in a rotated state when a twist ing force generated by the turning of the rod is restored, in the reverse direction and to return the rod to its original position.

In an embodiment, a pin provided with a spring is coupled to the upper portions of the brackets, to which the rotating shaft of the driving wheel is coupled, and is latched by the rod to limit the turning angles of the rod; and when the spring is compressed, the pin is unlatched to allow the rod to be foldable to the panel.

In an embodiment, the body part includes a cover installed in the space between the protective surfaces of the panel and having one side hingedly connected to the panel; and the handle part includes a wire connected to a brake installed in the handle, reaching the driving wheel, wound on the rotating shaft, connected to the cover, and pulling down the other side of the cover by the operation of the brake to allow the lower surface of the panel to press the outer circumference of the driving wheel.

In an embodiment, the gear means consists of helical gears.

In an embodiment, the driving shaft couples the housing block, the clutches and the operation block to one another in the direction opposite to the direction in which the clutch means is coupled; and the fourth gear is coupled to the outer circumference of the operation block to block the transmission of the rotational force increased by the gear means to the driving shaft when the speed of the driving wheel is above a predetermined level.

In an alternative embodiment, the handle part includes: a fork bar for supporting the rollable steering wheel; a handle bar, on which the horizontal handle is installed, having a polygonal connection protrusion formed on the lower surface thereof; a coupling bar turnably coupled to the lower side of the handle bar, having a fastening portion in the shape of a semicircular arc formed on the outer circumference thereof, fixed to connection bars hingedly connected to the link, turning upwardly when the handle part is folded, and folded toward the upper side of the body part; and a bridge bar, to which one of the connection bars hingedly connected to the link is fixed, folded toward the lower side of the body part when the handle part is folded to allow the fork bar integrally coupled to the lower side thereof to be introduced into the housing hole formed in the support surface of the body part, having a threaded portion formed on the outer circumference thereof and integrally combined with the fastening portion in a pair and fixed integrally to the fastening portion by nuts when being connected to the coupling bar so as to maintain the vertical connection with the coupling bar, and having an introduction recess, into which the connection protrusion is fitted, formed at the upper surface thereof, so that the handle bar and the fork bar are turned integrally.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a front view illustrating a standing bike according to an embodiment of the present invention;
FIG. 2 is a front view illustrating a state in which the standing bike of FIG. 1 is folded;
FIG. 3 is a partial perspective view illustrating the standing bike of FIG. 1;
FIG. 4 is an exploded perspective view illustrating a body part of the standing bike of FIG. 1;
FIG. 5 is a perspective view illustrating the body part of FIG. 4;
FIG. 6 is an exploded perspective view illustrating gear means of the standing bike of FIG. 1;
FIG. 7 is an assembled perspective view illustrating the gear means of FIG. 6;
FIG. 8 is an exploded perspective view illustrating a power generating part and a clutch part of the standing bike of FIG. 1;
FIG. 9 is a cross-sectional view illustrating the power generating part and the clutch part of FIG. 8;
FIG. 10 is a perspective view illustrating the power generating part and the clutch part of FIG. 8;
FIG. 11 is a perspective view illustrating the power generating part and the clutch part of FIG. 8, as viewed from a different angle;
FIG. 12 is a cross-sectional view illustrating clutches of the standing bike of FIG. 1;
FIG. 13 is a cross-sectional view illustrating the clutch part of FIG. 8;
FIG. 14 is a front view illustrating a standing bike according to another embodiment of the present invention;
FIG. 15 is a front view illustrating a state in which the standing bike of FIG. 14 is folded; and
FIG. 16 is a cross-sectional view illustrating a handle part of the standing bike of FIG. 14.

### DETAILED DESCRIPTION OF THE INVENTION

Preferred embodiments of the present invention will now be described in detail with reference to the accompanying drawings.

It should be noted that whenever possible, the same reference numerals will be used throughout the drawings and the description to refer to the same or like parts. In describing the present invention, detailed descriptions of related known functions or configurations are omitted in order to avoid making the essential subject of the invention unclear.

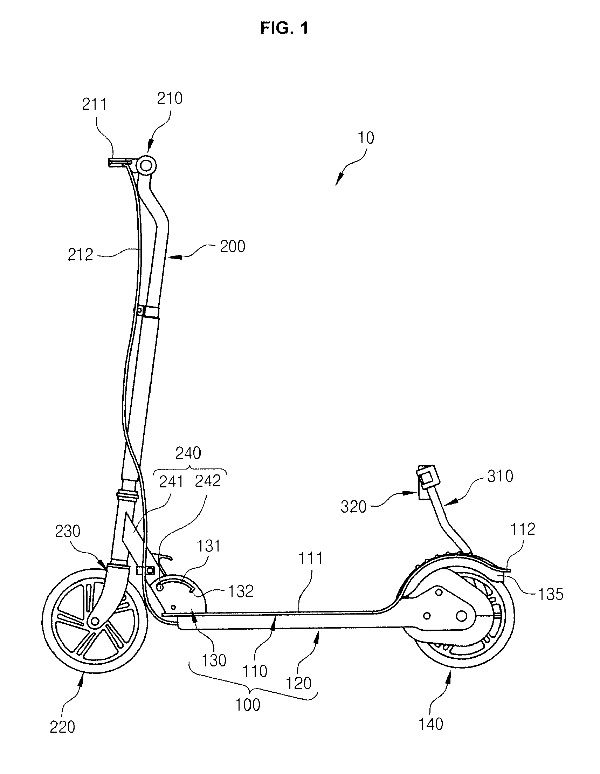

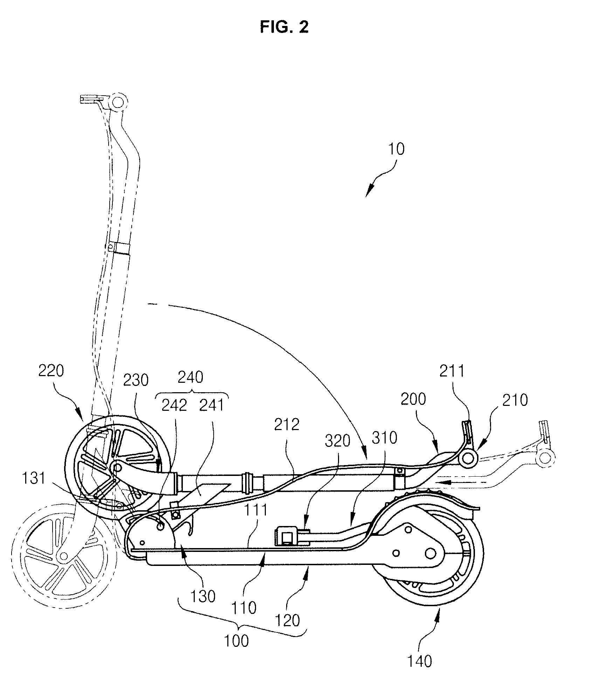

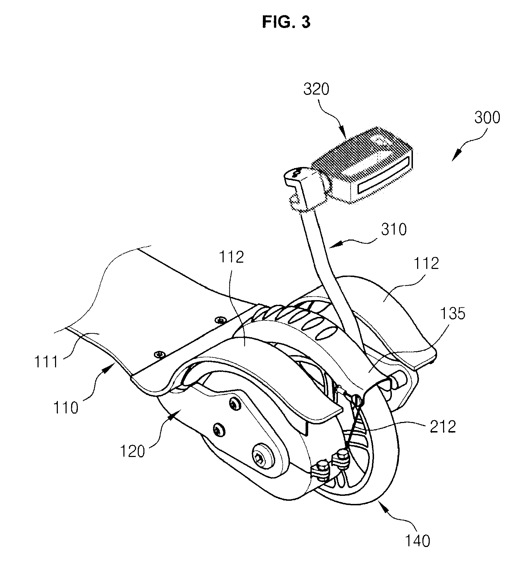

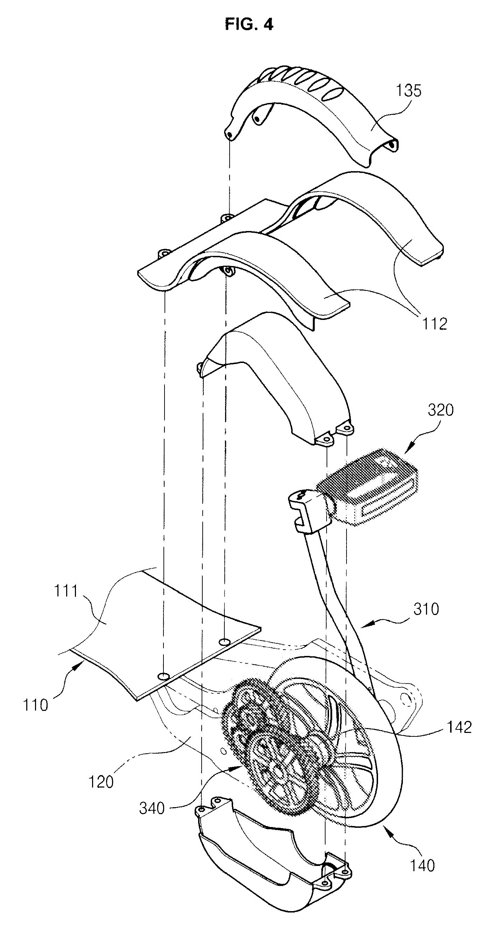

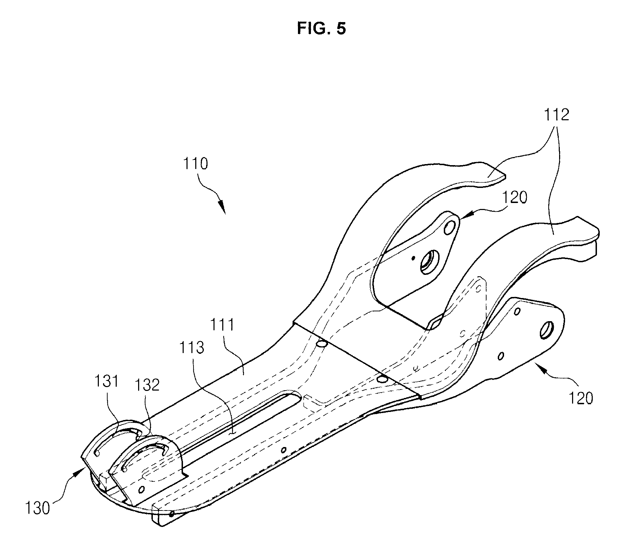

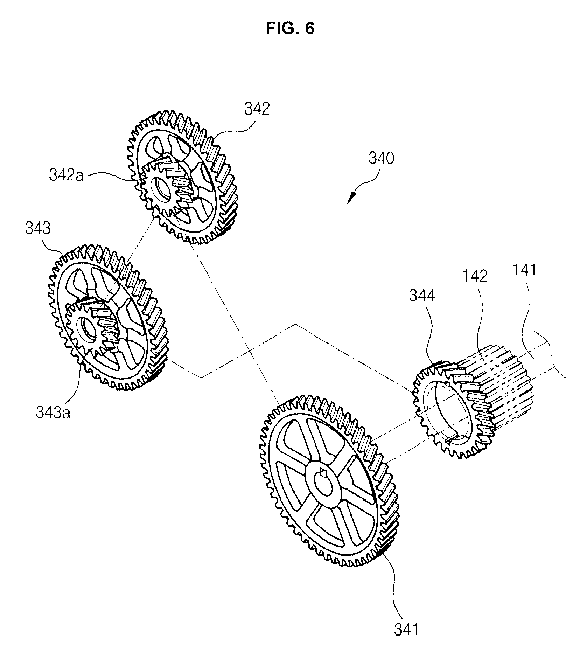

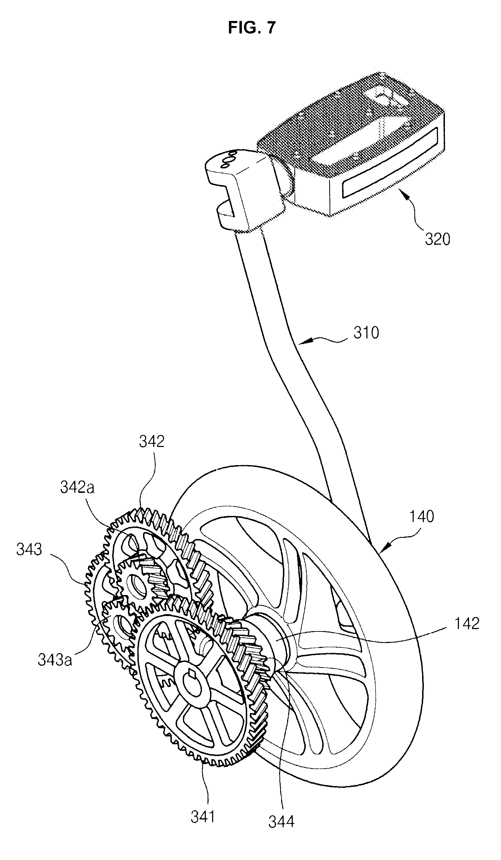

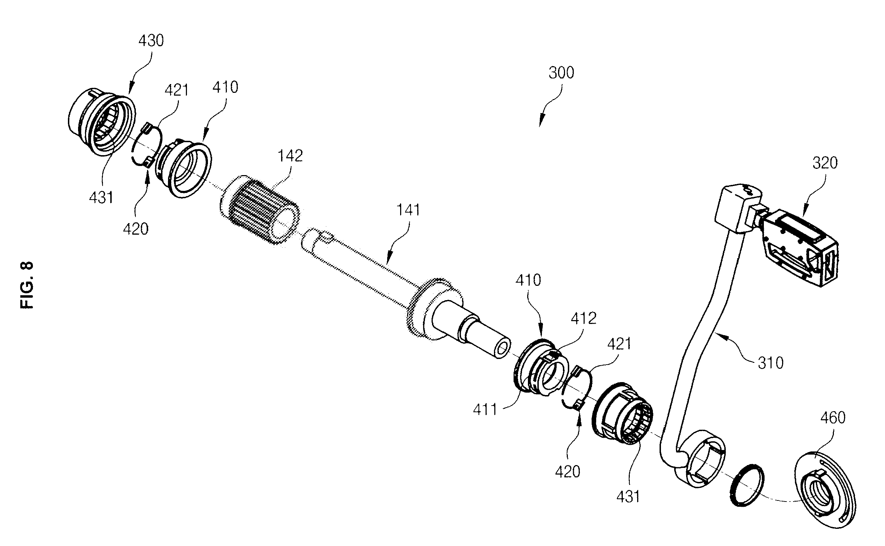

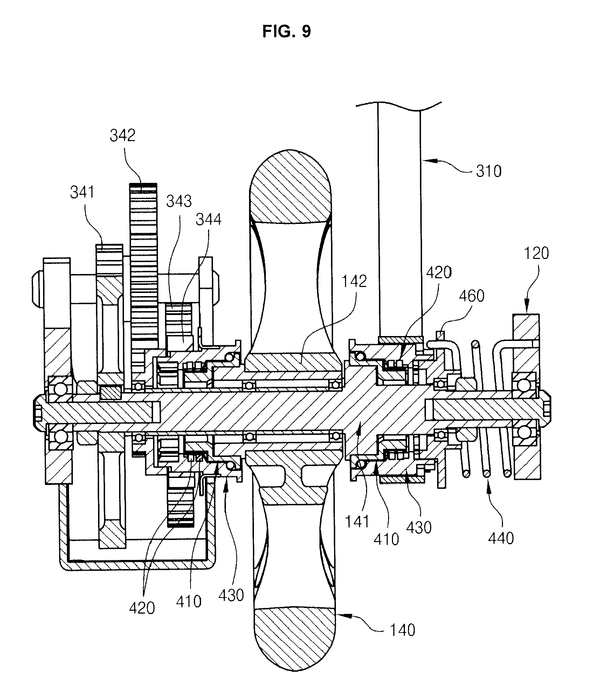

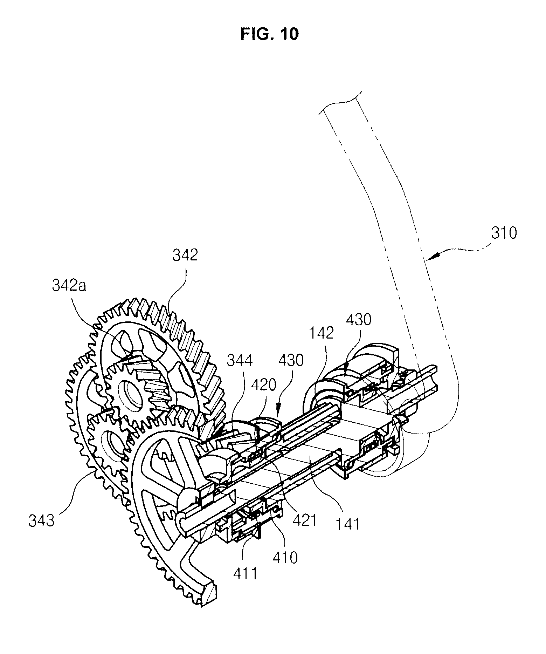

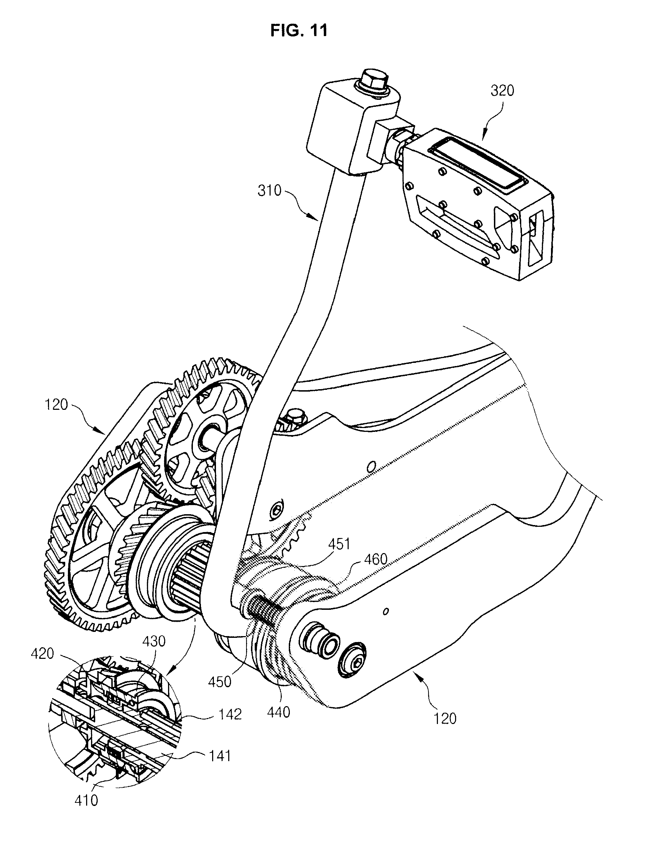

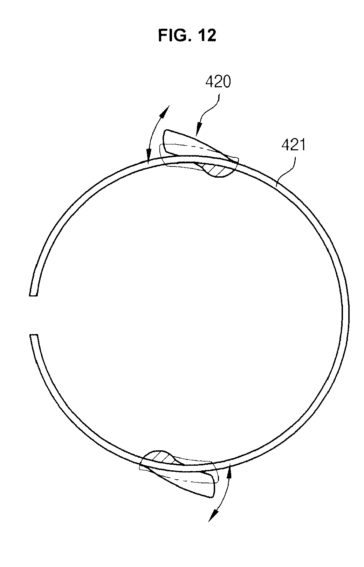

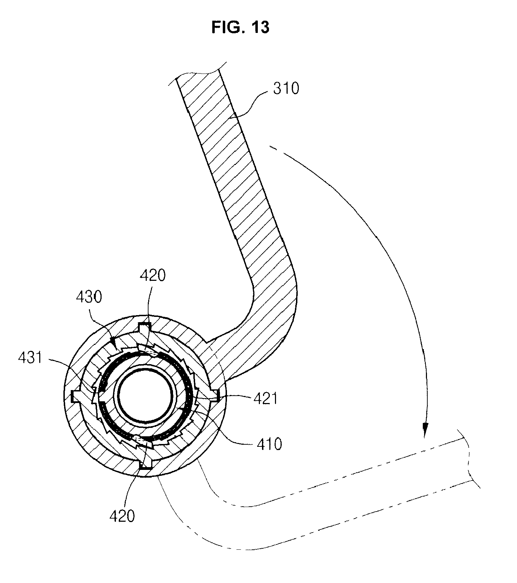

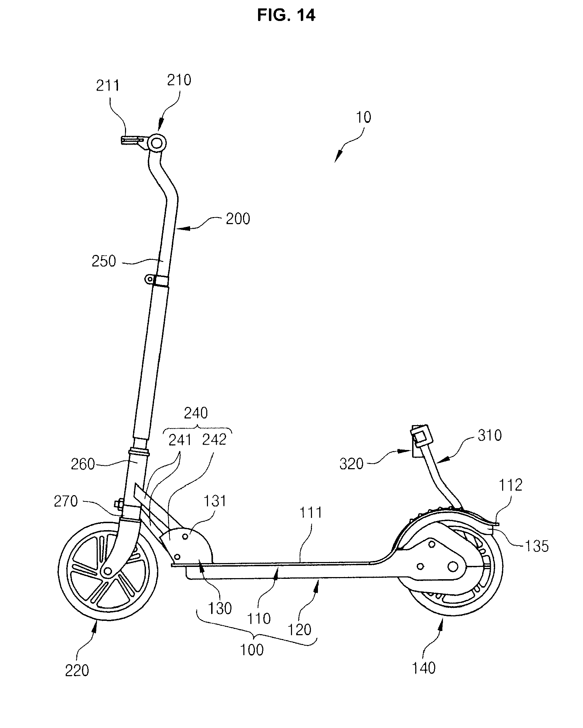

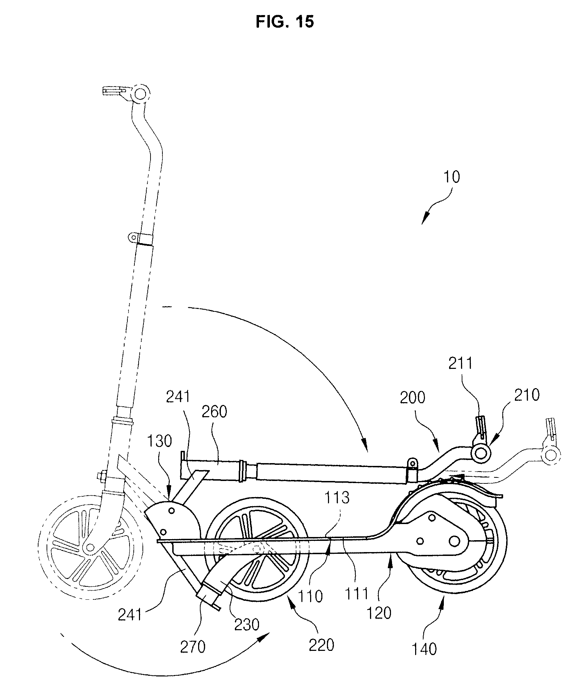

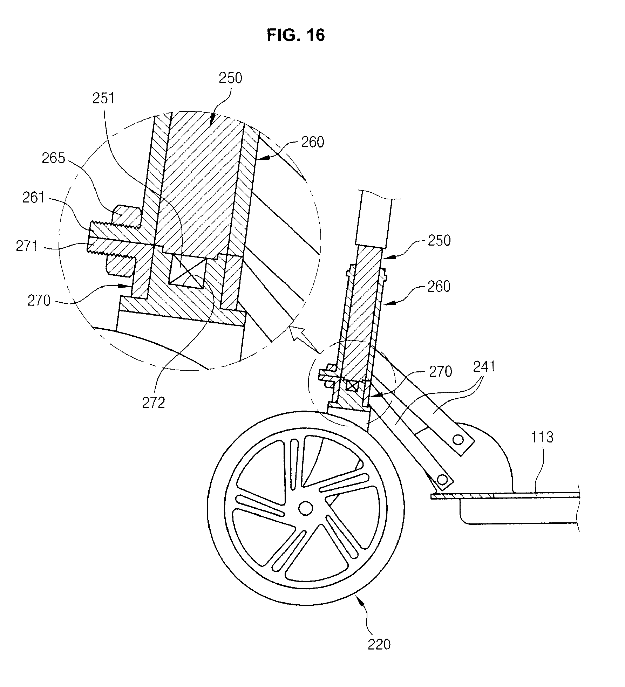

FIG. 1 is a front view illustrating a standing bike according to an embodiment of the present invention, FIG. 2 is a front view illustrating a state in which the standing bike of FIG. 1 is folded, FIG. 3 is a partial perspective view illustrating the standing bike of FIG. 1, FIG. 4 is an exploded perspective view illustrating a body part of the standing bike of FIG. 1, FIG. 5 is a perspective view illustrating the body part of FIG. 4, FIG. 6 is an exploded perspective view illustrating gear means of the standing bike of FIG. 1, FIG. 7 is an assembled perspective view illustrating the gear means of FIG. 6, FIG. 8 is an exploded perspective view illustrating a power generating part and a clutch part of the standing bike of FIG. 1, FIG. 9 is a cross-sectional view illustrating the power generating part and the clutch part of FIG. 8, FIG. 10 is a perspective view illustrating the power generating part and the clutch part of FIG. 8, FIG. 11 is a perspective view illustrating the power generating part and the clutch part of FIG. 8, as viewed from a different angle, FIG. 12 is a cross-sectional view illustrating clutches of the standing bike of FIG. 1, FIG. 13 is a cross-sectional view illustrating the clutch part of FIG. 8, FIG. 14 is a front view illustrating a standing bike according to another embodiment of the present invention, FIG. 15 is a front view illustrating a state in which the standing bike of FIG. 14 is folded, and FIG. 16 is a cross-sectional view illustrating a handle part of the standing bike of FIG. 14.

First, as illustrated in FIGS. 1 through 13, the standing bike 10 comprises a body part 100 on which a rider stands, a handle part 200 for steering the body part 100, and a power generating part 300 for generating a rotational force with limited angles.

The handle part 200 includes a fork bar 230, a steering wheel 220 rollably coupled to the fork bar 230, a horizontal handle 210 installed transversely on the fork bar 230 to steer the steering wheel 220, and connection means 240 having a connection bar 241 hingedly coupled to the outer circumference of the fork bar 230 to be turnable around a link 130 and clips installed at both sides of the connection bar so as to be moved along a guide hole in conjunction with the connection bar, so that the fork bar 230 is maintained in a horizontally or vertically supported state when the clips are latched by fixing recesses 132.

The body part 100 has a support surface 111 having a lengthwise housing hole 113 formed at the center thereof; and the body part 100 includes a panel 110 whose center is partially cut away to form a pair of rounded protective surfaces 112 in order to create a space, in which a driving wheel 140 and the power generating part 300 are installed, in the rear of the support surface 111, brackets 120 installed vertically at both sides of the lower surface of the panel 110 to support the rotations of the driving wheel 140 and the power generating part 300, and a link 130 installed in the front of the panel 110 and having an arc-shaped guide hole 131, through which the handle part 200 is turnably coupled, and the fixing recesses 132 formed at both distal ends of the guide hole.

The driving wheel 140 is positioned in the space of the panel 110. A rotating shaft 141 penetrates the center of the driving wheel 140 and has both sides coupled transversely to the brackets 120. A hollow driving shaft 142 is coupled to the outer circumference of the rotating shaft 141. The driving wheel 140 is fixed to the center of the outer circumference of the driving shaft 142.

The power generating part 300 includes a rod coupled to the center of the driving wheel 140 and a pedal 320 installed at one end of the rod 310. The pedal 320 is turned at limited angles from the top of the body part 100 to the rear side of the body part 100 to generate a rotational force, which is transmitted to the driving wheel 140, when being depressed.

The pedal 320 is automatically retuned to its original position by clutch means 400 after the depressing operation and is ready for next depressing operation. The power generating part 300 includes gear means 340 consisting of a plurality of gears with different gear ratios provided at a lateral side of the driving wheel 140 to increase the turning ratio of the pedal 320.

The gear means 340 is constructed such that the rotating shaft 141 connected to the rod 310 is installed so as to penetrate the driving wheel 140, a first gear 341 is fixed to the rotating shaft 141, the rotational force is transmitted through a second gear 342, a third gear 343 and a fourth gear 344 engaged sequentially with the first gear 341.

The second gear 342 and the third gear 343 are provided with a second sub-gear 342a and a third sub-gear 343a whose gear ratios are less than those of the second gear 342 and the third gear 343, respectively, to sequentially increase the rotation ratio inputted from the first gear 341 and to output the increased rotation ratio to the fourth gear 344.

The gear means 340 consists of helical gears to keep a tightly engaged state of the gears against vibration and shock encountered during running on a road.

The rotational force increased by the gear means 340 is transmitted to the driving shaft 142 accommodating the rotating shaft 141 therein.

The driving wheel 140 is fixed to the center of the outer circumference of the driving shaft 142 and the fourth gear 344 is fixed to the outer circumference of one side of the driving shaft 142.

The fourth gear 344 rotates the driving shaft 142 engaged with the gear means 340. The rotation of the driving shaft 142 rolls the driving wheel 140 to move the body part 100.

The clutch means 400 serves to automatically return the pedal 320 to its original position after the pedal 320 is depressed and allows the pedal 320 to be ready for next depressing operation, and the construction thereof is explained below.

The clutch means 400 includes a housing block 410, clutches 420, an operation block 430 and an elastic member 440.

The housing block 410 is fixed to one end of the rotating shaft 141 of the driving wheel 140. The housing block 410 is formed with ring grooves 411 on the outer circumference thereof and housing recesses 412 symmetrical to each other in the upper and lower portions thereof.

The clutches 420 are elastically coupled to rings 421 introduced into the ring grooves 411 to rotate in the housing recesses 412.

The operation block 430 is rotatably coupled to the outer circumference of the housing block 410 and is provided with latch gears 431 on the inner circumference thereof so that the clutches 420 are latched in only one direction by the latch gears 431 to transmit the rotational force transmitted through the rod 310 of the pedal 320 to the housing block 410 and the rotating shaft 141 therethrough and to roll the driving wheel 140.

A finishing member 460 is fixed to a lateral side of the operation block 430, and the elastic member 440 has a front end fixed to the finishing member 460 and a distal end fixed to the bracket 120 to rotate the housing block 410, which is in a rotated state when a twisting force generated by the turning of the rod 310 is restored, in the reverse direction and to return the rod 310 to its original position.

That is, the rod 310 is moved in conjunction with the operation block 430 when the rod 310 is turned at a limited angle by the pedal 320.

At this time, the clutches 420 are latched by the latch gears 431. Due to this latching, the housing block 410 is rotated integrally with the operation block 430 to rotate the rotating shaft 141.

The rotational force of the rotating shaft 141 is increased by the gear means 340 and is then transmitted to the driving shaft 142 to roll the driving wheel 140.

The limited rotation of the rod 310 allows the elastic member 440 to generate a twisting force. When the limited rotational force of the rod 310 disappears, the restoration force of the twisted elastic member 440 rotates the finishing member 460 in the reverse direction to return the rod 310 to its original position.

In order to selectively fold the rod 310, a pin 451 provided with a spring 450 is coupled to the upper portions of the brackets 120, to which the rotating shaft 141 of the driving wheel 140 is coupled, and is latched by the rod 310 to limit the turning angles of the rod 310.

When the spring 450 is compressed, the pin 451 is unlatched to allow the rod 310 to be foldable to the panel 110. This folding minimizes the volume of the standing bike 10, thus improving the portability and storability of the standing bike 10.

Further, the standing bike 10 is imparted with the function of a brake 211.

Specifically, a cover 135 is installed in the space between the protective surfaces 112 of the panel 110 and has one side hingedly connected to the panel 110. A wire 212 is connected to the brake 211 installed in the handle 210, reaches the driving wheel 140, is wound on the rotating shaft 141, and is connected to the cover 135.

The wire 212 pulls down the other side of the cover 135 by the operation of the brake 211 to allow the lower surface of the panel 110 to press the outer circumference of the driving wheel 140. The brake 211 is operated to control the running speed of the standing bike 10 and stops the running of the standing bike 10.

The standing bike 10 comprises means for preventing the standing bike 10 from running at high speed.

The driving shaft 142 couples the housing block 410, the clutches 420 and the operation block 430 to one another in the direction opposite to the direction in which the clutch means 400 is coupled, and the fourth gear 344 is coupled to the outer circumference of the operation block 430 to block the transmission of the rotational force increased by the gear means 340 to the driving shaft 142 when the speed of the driving wheel 140 is above a predetermined level.

That is, when the standing bike 10 runs along a downhill road or at a high speed, a rotational force generated by the pedal 320 is not transmitted to the driving wheel 140 any more, which prevents high-speed running of the standing bike 10.

An explanation will be given another embodiment of the handle part 200.

The handle part 200 includes: a fork bar 230 for supporting the rollable steering wheel 220; a handle bar 250, on which the horizontal handle 210 is installed, having a polygonal connection protrusion formed on the lower surface thereof; a coupling bar 260 turnably coupled to the lower side of the handle bar 250, having a fastening portion 261 in the shape of a semicircular arc formed on the outer circumference thereof, fixed to connection bars 241 hingedly connected to the link 130, turning upwardly when the handle part 200 is folded, and folded toward the upper side of the body part 100; and a bridge bar 270, to which one of the connection bars 241 hingedly connected to the link 130 is fixed, folded toward the lower side of the body part 100 when the handle part 200 is folded to allow the fork bar 230 integrally coupled to the lower side thereof to be introduced into the housing hole 113 formed in the support surface 111 of the body part 100, having a threaded portion 271 formed on the outer circumference thereof and integrally combined with the fastening portion 261 in a pair and fixed integrally to the fastening portion 261 by nuts 265 when being connected to the coupling bar 260 so as to maintain the vertical connection with the coupling bar 260, and having an introduction recess 272, into which the connection protrusion 251 is fitted, formed at the upper surface thereof, so that the handle bar 250 and the fork bar 230 are turned integrally.

The handle part 200 is constructed so as to selectively vertically connect the coupling bar 260, on which the handle 210 is installed, to the bridge bar 270, below which the steering wheel 220 is installed, while turnably connecting the coupling bar 260 and the bridge bar 270 to the link 130 through the connection bars 241.

When it is intended to store or carry the standing bike 10, the nuts 265 are separated from the fastening portion 261 and the threaded portion 271 integrally combined to each other therethrough.

Thereafter, the coupling bar 260 and the bridge bar 270 vertically connected to each other are turned toward the body part 100. The coupling bar 260 is folded toward the upper side of the body part 100, and the bridge bar 270 mounted on the fork bar is folded toward the lower side of the body part 100. The steering wheel 220 is introduced into the housing hole 113 of the body part. This folding can minimize the volume of the standing bike 10.

The handle bar 250 of the handle part 200 is controllable in length.

When a user wishes to enjoy riding the standing bike 10, he/she turns the coupling bar 260 and the bridge bar 270 to their original states in which the coupling bar 260 is vertically connected to the bridge bar 270.

When the vertical connection of the coupling bar 260 and the bridge bar 270 is finished, the fastening portion 261 and the threaded portion 271 in the shape of semicircular arcs form a circular shape. The user can maintain the vertical connection of the coupling bar 260 and the bridge bar 270 by fastening the nuts 265 to the fastening portion 261 and the threaded portion 271.

Simultaneously with the vertical connection, the connection protrusion 251 of the coupling bar 260 is fitted into the introduction recess 272 of the bridge bar 270. With this arrangement, the connection protrusion 251 and the introduction recess 272 in the shape of polygons are turned integrally by the movement of the handle 210. This integral turning enables steering of the steering wheel 220.

The operational principle of the standing bike 10 will be described below.

First, a user puts his/her one foot on the support surface of the body part 100 and depresses the pedal 320 with the other foot in a direction opposite to the advancing direction of the standing bike 10 to turn the rod 310 of the pedal 320 at a limited angle.

The operation block 430 integrally fixed to the rod 310 turning at limited angles transmits a rotational force to the housing block 410 through the clutches 420 engaged with the latch gears 431.

At the same time, the rotational force twists the elastic member 440 fixed between the finishing member 460 coupled to a lateral side of the operation block 430 and one of the brackets 120.

The rotating shaft 141 integrally fixed to the housing block 410 transmits the rotational force to the gear means 340 by which the rotation ratio of the driving wheel 140 is increased.

Specifically, the first gear 341 fixed to the rotating shaft 141 is engaged with the second sub-gear 342a to increase the number of rotations, and the second gear 342 integrally fixed to the second sub-gear 342a is engaged with the third sub-gear 343a to further increase the number of rotations.

The third gear 343 integrated with the third sub-gear 343a transmits the rotational force to the fourth gear 344. The fourth gear 344 is fixed to the driving shaft 142 fixed to the center of the driving wheel 140 to roll the driving wheel 140.

As described above, the standing bike 10 can be voluntarily moved forward by repeatedly turning the pedal 320 at limited angles using the user's weight and the muscular power of the user's leg. Another rotational force can be generated when the user shifts the center of his/her weight. Therefore, the user can take exercise without feeling fatigue while minimizing his/her physical exhaustion.

When the pedal 320 is not depressed any more by the user, an elastic force generated by the twistable elastic member 440 turns reversely the finishing member 460 to return the finishing member 460 to its original position.

Due to this mechanism, the pedal 320 is automatically returned to its original position after being depressed and is ready for next depressing operation, so that the user can easily depress the pedal 320 repeatedly. Therefore, the user can easily generate driving power by his/her simple repetitive operations.

In addition, when the standing bike 10 runs along a downhill road or at a high speed above a predetermined level, the housing block 410, the clutches 420 and the operation block 430 coupled to the fourth gear 344 do not transmit the rotational force increased by the gear means 340 to the driving shaft any more. Therefore, the occurrence of accidents can be minimized.

Although the present invention has been described herein with reference to the foregoing embodiments and the accompanying drawings, the scope of the present invention is not limited to the embodiments and drawings. Therefore, it will be evident to those skilled in the art that various substitutions, modifications and changes are possible, without departing from the scope and spirit of the invention as disclosed in the accompanying claims.

As is apparent from the above description, the standing bike of the present invention can be voluntarily moved forward by repeatedly turning a pedal at limited angles using a rider's weight and the muscular power of the rider's leg. Another rotational force can be generated when the rider shifts the center of his/her weight. Therefore, the rider can take exercise without feeling fatigue, thus minimizing his/her physical exhaustion.

The pedal of the standing bike is automatically returned to its original position after being depressed and is ready for next depressing operation, so that the rider can easily depress the pedal repeatedly. Therefore, the rider can easily generate driving power by his/her simple repetitive operations.

A first rotational force generated at limited angles when the pedal is depressed increases the rotation ratio of the driving wheel through the plural gears to improve the driving performance of the standing bike.

The standing bike is constructed such that a driving force of the pedal is not transmitted to the driving wheel any more when running at a high speed along a downhill road, thereby minimizing the occurrence of accidents.

The standing bike is constructed such that a plurality of helical gears, which are effective in keeping their tightly engaged state against vibration and shock encountered during running, are used as the gear means to convert a depressing operation of the pedal to a rotational movement and to increase the rotation ratio of the driving wheel.

The handle and the rod of the pedal can be selectively folded to minimize the volume of the standing bike, achieving improved portability and storability.

## Claims

1. A standing bike, comprising:
a body part including a driving wheel rollably coupled to the rear thereof;
a handle part including a steering wheel provided in the front of the body part to determine the steering direction of the body part; and
a power generating part including a rod coupled to the center of the driving wheel, a pedal installed at one end of the rod to generate driving power, and gear means consisting of a plurality of gears with different gear ratios provided at a lateral side of the driving wheel to increase the turning ratio of the pedal,
wherein the pedal is turned at limited angles from the top of the body part to the rear side of the body part to generate a rotational force, which is transmitted to the driving wheel, when being depressed, and the pedal is automatically returned to its original position by clutch means after the depressing operation and is ready for next depressing operation.

2. The standing bike of claim 1, wherein the body part has a support surface, on which a rider's foot is mounted, having a lengthwise housing hole formed at the center thereof; and the body part includes a panel whose center is partially cut away to form a pair of rounded protective surfaces in order to create a space, in which the driving wheel and the power generating part are installed, in the rear of the support surface, brackets installed vertically at both sides of the lower surface of the panel to support the rotations of the driving wheel and the power generating part, and a link installed in the front of the panel and having an arc-shaped guide hole, through which the handle part is turnably coupled, and fixing recesses formed at both distal ends of the guide hole.

3. The standing bike of claim 1 or 2, wherein the handle part includes a fork bar, the steering wheel rollably coupled to the fork bar, a handle bar vertically connected to the upper side of the fork bar, a horizontal ha ndle installed transversely on the handle bar to steer the steering wheel, and connection means having a connection bar hingedly coupled to the outer circumference of the fork bar to be turnable around the link and clips installed at both sides of the connection bar so as to be moved along the guide hole in conjunction with the connection bar, so that the fork bar is maintained in a horizontally or vertically supported state when the clips are latched by the fixing recesses.

4. The standing bike of claim 1, wherein the gear means is constructed such that a rotating shaft connected to the rod is installed so as to penetrate the driving wheel, a first gear is fixed to the rotating shaft, the rotational force is increased and is transmitted through a second gear, a third gear and a fourth gear engaged sequentially with the first gear, and a driving shaft accommodating the rotating shaft therein is fixed to the center of the driving wheel to transmit the rotational force of the fourth gear fixed to the outer circumference thereof to the driving wheel.

5. The standing bike of claim 4, wherein the second gear and the third gear are provided with a second sub-gear and a third sub-gear whose gear ratios are less than those of the second gear and the third gear, respectively, to sequentially increase the rotation ratio inputted from the first gear and to output the increased rotation ratio to the fourth gear.

6. The standing bike of claim 1, wherein the clutch means is fixed to one end of the rotating shaft of the driving wheel; and the clutch means includes a housing block formed with ring grooves on the outer circumference thereof and housing recesses symmetrical to each other in the upper and lower portions thereof, clutches elastically coupled to rings introduced into the ring grooves to rotate in the housing recesses, an operation block rotatably coupled to the outer circumference of the housing block and provided with latch gears on the inner circumference thereof so that the clutches are latched in only one direction by the latch gears to transmit the rotational force transmitted through the rod of the pedal to the housing block and the rotating shaft therethrough and to roll the driving wheel, a finishing member fixed to a lateral side of the operation block, and an elastic member having a front end fixed to the finishing member and a distal end fixed to one of the brackets to rotate the housing block, which is in a rotated state when a twisting force generated by the turning of the rod is restored, in the reverse direction and to return the rod to its original position.

7. The standing bike of claim 1 or 2, wherein a pin provided with a spring is coupled to the upper portions of the brackets, to which the rotating shaft of the driving wheel is coupled, and is latched by the rod to limit the turning angles of the rod; and when the spring is compressed, the pin is unlatched to allow the rod to be foldable to the panel.

8. The standing bike of claim 1 or 2, wherein the body part includes a cover installed in the space between the protective surfaces of the panel and having one side hingedly connected to the panel; and the handle part includes a wire connected to a brake installed in the handle, reaching the driving wheel, wound on the rotating shaft, connected to the cover, and pulling down the other side of the cover by the operation of the brake to allow the lower surface of the panel to press the outer circumference of the driving wheel.

9. The standing bike of claim 4 or 5, wherein the gear means consists of helical gears.

10. The standing bike of any of claims 4 to 6, wherein the driving shaft couples the housing block, the clutches and the operation block to one another in the direction opposite to the direction in which the clutch means is coupled; and the fourth gear is coupled to the outer circumference of the operation block to block the transmission of the rotational force increased by the gear means to the driving shaft when the speed of the driving wheel is above a predetermined level.

11. The standing bike of claim 1 or 2, wherein the handle part includes:
a fork bar for supporting the rollable steering wheel; a handle bar, on which the horizontal handle is installed, having a polygonal connection protrusion formed on the lower surface thereof; a coupling bar turnably coupled to the lower side of the handle bar, having a fastening portion in the shape of a semicircular arc formed on the outer circumference thereof, fixed to connection bars hingedly connected to the link, turning upwardly when the handle part is folded, and folded toward the upper side of the body part; and a bridge bar, to which one of the connection bars hingedly connected to the link is fixed, folded toward the lower side of the body part when the handle part is folded to allow the fork bar integrally coupled to the lower side thereof to be introduced into the housing hole formed in the support surface of the body part, having a threaded portion formed on the outer circumference thereof and integrally combined with the fastening portion in a pair and fixed integrally to the fastening portion by nuts when being connected to the coupling bar so as to maintain the vertical connection with the coupling bar, and having an introduction recess, into which the connection protrusion is fitted, formed at the upper surface thereof, so that the handle bar and the fork bar are turned integrally.
